# EUROPEAN PATENT APPLICATION

(11) **EP 4 560 366 A1**
(43) Date of publication of application: **28.05.2025**
(21) Application number: 24212508.6
(22) Date of filing: 12.11.2024
(51) Int. Cl.: G02B 5/124, G02B 27/00, G02B 30/56

(54) **DISPLAY DEVICE**

(30) Priority: 21.11.2023 JP 2023197203
(71) Applicant: Alps Alpine Co., Ltd., Ota-ku, Tokyo 145-8501 (JP)
(72) Inventor: Yuza, Shingo, Iwaki, Fukushima (JP); Ashimine, Katsunari, Iwaki, Fukushima (JP); Murata, Akitomo, Iwaki, Fukushima (JP)
(74) Representative: Schmitt-Nilson Schraud Waibel Wohlfrom Patentanwälte Partnerschaft mbB

(57) **Abstract**

A display device for displaying an aerial image using retro-reflection includes: an optical member configured to separate incident light into reflected light and transmitted light; a retro-reflective member positioned to face the optical member and having a cutout or an opening that features a design; a light source positioned on a backside of the retro-reflective member; and a transparent member made of a substance with a refractive index greater than 1, and positioned between the optical member and the retro-reflective member.

## Description

The present disclosure relates to a display device with a function to display images in midair using retro-reflection.

Aerial imaging by retro-reflection (AIRR) is known. For example, there is a display device having: a half mirror; an image output device that outputs light toward one surface of the half mirror; and a retro-reflective member that is positioned between the image output device and the half mirror, and has a plurality of openings formed therein (see, for example, JP 2018-81138 A). Also, there is an aerial display device having a planar lighting body, a retro-reflective sheet, and a half mirror. The planar lighting body has a light emitting unit. The retro-reflective sheet is positioned on the light-emitting surface side of the planar lighting body and has multiple through-holes where an aerial drawing is displayed in a position corresponding to the light emitting unit. The half mirror is positioned on the light-emitting surface side of the retro-reflective sheet (see, for example, JP 2022-140264 A).

The present disclosure relates to a display device according to the appended claims. Embodiments are disclosed in the dependent claims. According to an aspect of the present disclosure, a display device displays an aerial image using retro-reflection, and includes:
an optical member configured to separate incident light into reflected light and transmitted light;
a retro-reflective member positioned to face the optical member and having a cutout or an opening that features a design;
a light source positioned on a backside of the retro-reflective member; and
a transparent member made of a substance with a refractive index greater than 1, and positioned between the optical member and the retro-reflective member.

According to aspects of the present disclosure, a transparent member with a refractive index greater than 1 is provided between an optical member and a retro-reflective member, so that the difference in refractive index between the transparent member and the retro-reflective member is reduced, and reflection at the interface between the transparent member and the retro-reflective member is prevented or substantially prevented. By this means, stray light and virtual aerial images are prevented or substantially prevented from being produced, so that aerial images' visibility, contrast, and so forth can be improved.
FIG. 1A is a perspective view of an existing aerial image display device;
FIG. 1B is a schematic cross-sectional view of the device of FIG. 1A;
FIG. 2A is a view for explaining a cross-sectional structure of a retro-reflective sheet, as well as the sheet's surface reflection, internal reflection, and so forth;
FIG. 2B is a view for explaining how stray light (virtual images) and virtual aerial images are produced in an existing aerial image display device;
FIG. 3 is a view showing aerial images and virtual aerial image in an existing aerial image display device;
FIG. 4A is a schematic cross-sectional view of an aerial image display device according to an embodiment of the present disclosure; and
FIG. 4B is a view for explaining how an aerial image is produced in an aerial image display device according to an embodiment of the present disclosure.

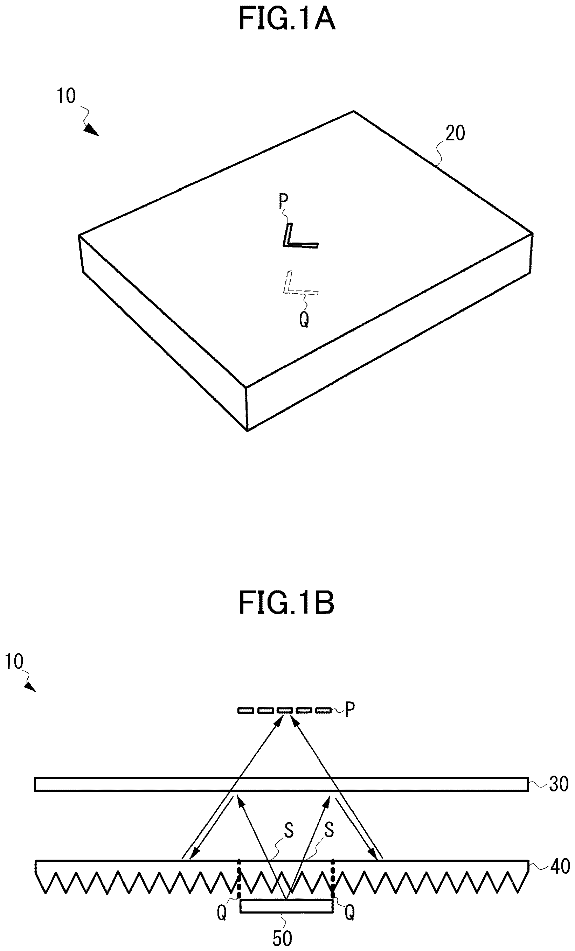

Some AIRR-based aerial display systems use LEDs as light sources and display fixed display patterns in midair. To make such display devices smaller and thinner, the optical parts are arranged so as to be parallel to each other and face each other. An example of its structure is shown in FIG. 1.

FIG. 1A is a schematic perspective view of an existing aerial image display device, and FIG. 1B is a schematic cross-sectional view thereof. The aerial image display device 10 has, for example, a beam splitter 30 positioned on a surface of a rectangular housing 20, a retro-reflective sheet 40 positioned inside the housing 20 so as to face the beam splitter 30, and a light source 50 such as an LED positioned on the backside of the retro-reflective sheet 40.

The retro-reflective sheet 40 is an optical member or optical element that reflects light in the same direction the incident light came from, and has cutouts or openings S formed thereon. The cutouts or openings S produce a design (fixed display pattern) Q that represents an aerial image P's original image. The aerial image P in FIG. 1A shows, for example, an icon that represents the direction for "fast reversing" the playback.

When the light source 50 illuminates the back surface of the retro-reflective sheet 40, the light that passes through the cutouts S is retro-reflected between the retro-reflective sheet 40 and the beam splitter 30, and an aerial image P of a design Q is displayed above the beam splitter 30.

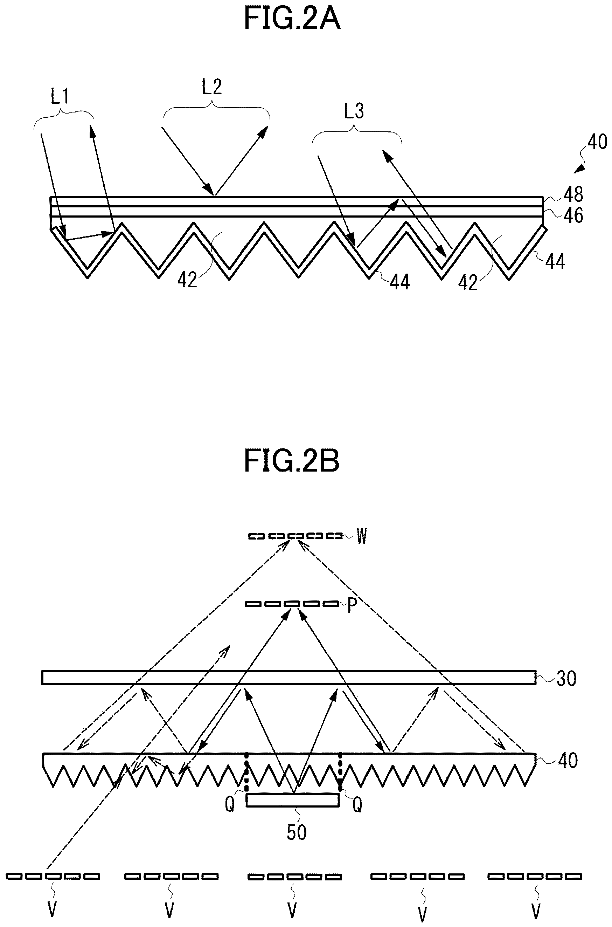

However, the existing aerial image display device 10 has the following problem. FIG. 2A is a diagram illustrating a cross-sectional structure of the retro-reflective sheet 40, as well as the surface reflection of the retro-reflective sheet 40 and the internal reflection that occurs inside the retro-reflective sheet 40. The retro-reflective sheet 40 is composed of: a pattern forming part 42 made of an optically transparent material; a metal layer 44 (e.g., Al) formed using inclined surfaces of the pattern forming part 42; an optical adhesive 46 applied to the upper surface of the pattern forming part 42; and a phase plate 48 (e.g., a λ/4 plate) attached onto the optical adhesive 46. The metal layer 44 functions as a reflective layer, and its thickness, including the optical adhesive 46 and the phase plate 48, is 1 mm or less, for example.

Light L1: In the retro-reflective sheet 40, incident light is reflected multiple times by the metal layer 44, and the reflected light is reflected in the same direction the incident light came from. A light beam L1 produced thus matches the optical properties of the retro-reflective sheet 40 and provides desirable light.

Light L2: Part of the light incident on the retro-reflective sheet 40 is reflected on the surface of the phase plate 48, and the reflected light is specularly-reflected at a reflection angle that is equal to the incident angle. A light beam L2 produced thus does not match the optical properties of the retro-reflective sheet 40 and provides undesirable light.

Light L3: Part of the light incident on the retro-reflective sheet 40 is reflected on the metal layer 44, then internally reflected on the phase plate 48, and reflected by the metal layer 44 again. A light beam L3 produced thus shows a large optical path difference between the incident light and the reflected light, and therefore does not match the optical properties of the retro-reflective sheet 40, providing undesirable light.

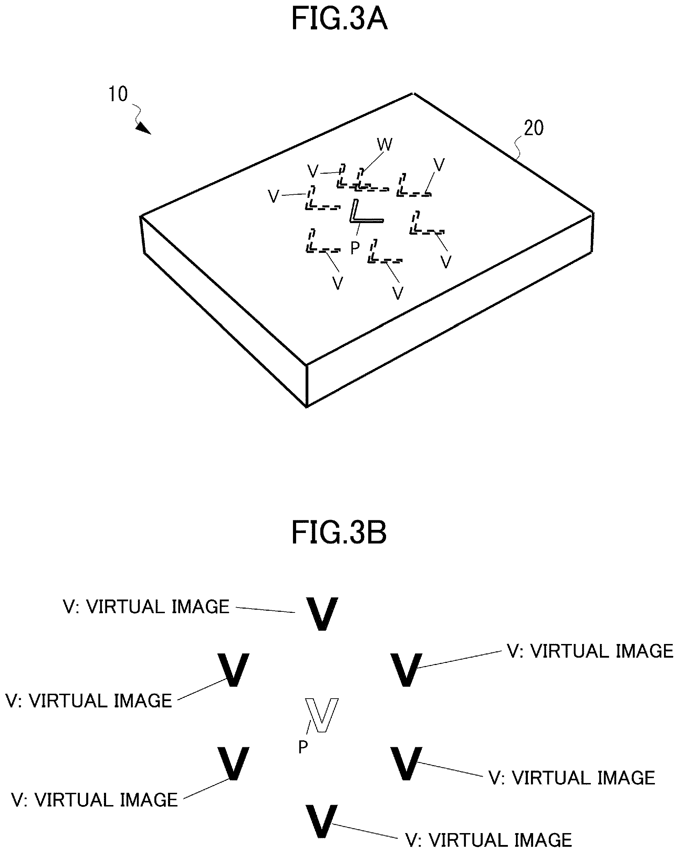

Referring now to FIG. 2B, when the retro-reflective sheet 40 produces undesirable light L2 and L3, stray light V (or virtual images) is produced from the design Q, and a virtual aerial image W is produced from the stray light V (or virtual images). As a result of this, as shown in FIG. 3A and FIG. 3B, multiple virtual images V and virtual aerial images W appear around or in the range in which the user observes the aerial image P, resulting in a decrease in the aerial image P's visibility, contrast, and so forth.

The present disclosure therefore aims to address the above-described existing problem by providing a display device that can prevent or substantially prevent stray light or virtual aerial images from being produced and improve aerial images' visibility, contrast, and so forth.

In view of the foregoing, embodiments of the present disclosure will be described in detail.

The display device according to the present disclosure displays aerial images in three-dimensional space using retro-reflection, without the need for special glasses or the like. Note that the drawings referred to in the following description of embodiments of the present disclosure include exaggerated views to help understand the invention, and do not directly or accurately represent the actual shape or scale of the actual device.

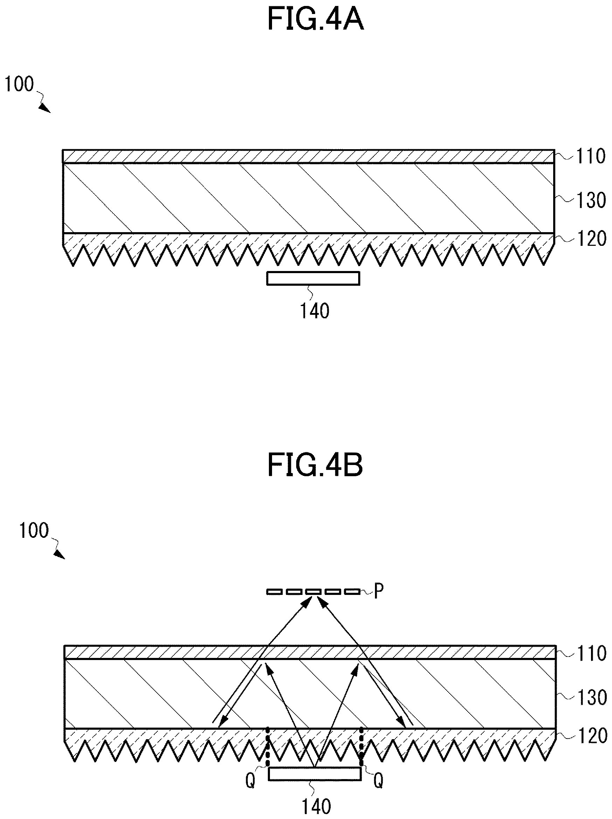

FIG. 4A is a schematic cross-sectional view of an aerial image display device according to an embodiment of the present disclosure, and FIG. 4B is a diagram for explaining how an aerial image is produced. According to this embodiment, an aerial image display device 100 is configured to include, for example: a beam splitter 110 positioned on a surface of a rectangular housing or casing; a retro-reflective sheet 120 positioned to face the beam splitter 110; a transparent member 130 with a refractive index greater than 1, positioned between the beam splitter 110 and the retro-reflective sheet 120; and a light source 140 positioned on the backside of the retro-reflective sheet 120.

The beam splitter 110 is an optical member or optical element that separates incident light into reflected light and transmitted light. For the beam splitter 110, for example, a half mirror may be used. In the event polarized light is used, a polarizing beam splitter may be used.

The retro-reflective sheet 120 is positioned to face the beam splitter 110. The retro-reflective sheet 120 is an optical member or optical element that reflects light in the same direction the incident light came from. The retro-reflective sheet 130 is composed of, for example, a prism-like retro-reflective element, a bead-like retro-reflective element, and so forth, such as a pyramid-like retro-reflective element, a full cube corner-like retro-reflective element, or the like. According to one example, the retro-reflective sheet 120 is structured in the same way as the retro-reflective sheet 40 shown in FIG. 2A. That is, the retro-reflective sheet 120 may include: a pattern forming part 42 formed from a transparent material; a metal layer 44 formed using inclined surfaces of the pattern forming part 42; an optical adhesive 46 applied to the upper surface of the pattern forming part 42; and a phase plate 48 (e.g., a λ/4 plate) attached to the optical adhesive 46. However, the retro-reflective sheet 120 is not limited to this structure, and does not have to have a phase plate 48 on its surface.

The shape and size of the retro-reflective sheet 120 are not limited to any particular type, and the retro-reflective sheet 120 may have cutouts or openings formed thereon to form a design Q, which is an aerial image P's original image. For example, as shown in FIG. 1A, the design Q is an icon that represents the direction for "rewinding" the playback. However, any type and number of designs of choice (characters, icons, etc.) may be formed on the retro-reflective sheet 120.

The light source 140 is positioned on the backside of the retro-reflective sheet 120. The light source 140 is not limited to any particular type, and, for example, an LED light source, a display light source such as a liquid crystal, or a projecting light source such as a projector, and so forth may be used. When using an LED light source, for example, multiple LEDs may be positioned in a linear or planar arrangement to efficiently and evenly illuminate the entire back surface of the retro-reflective sheet 120. According to one example, a diffusion plate or a diffusion sheet may be used together to illuminate the back surface of the retro-reflective sheet 120 uniformly. Furthermore, the light source 140 may include a polarizing plate or a polarizing film and illuminate the back surface of the retro-reflective sheet 120 with polarized light. In this case, a polarizing beam splitter may be used as the beam splitter 110, and a λ/4 film may be provided on the surface of the retro-reflective sheet 120. The polarization state of the polarizing plate or the polarizing film is determined based on their state of polarization in relationship to the state of polarization at the polarizing beam splitter.

Between the beam splitter 110 and the retro-reflective sheet 120, a light-permeable transparent member 130 having a refractive index greater than 1 is positioned. Preferably, a material having a refractive index close to that of the retro-reflective sheet 120 is selected for the transparent member 130, so that the difference in refractive index between the transparent member 130 and the retro-reflective sheet 120 is made as small as possible. If a phase plate 48 is formed over the surface of the retro-reflective sheet 120, a material having a refractive index that is close to that of the phase plate 48 is selected. When two or more refractive indices are "close," this means that their difference is as small as possible. For example, if a λ/4 plate (or a λ/4 film) is formed, and the λ/4 plate has a refractive index of approximately 1.5, an acrylic material may be selected for the transparent member 130 as a material having a refractive index of approximately 1.5. Note that the transparent member 130 can be made of other plastic materials besides an acrylic material, depending on the refractive index of the retro-reflective sheet 120 and the phase plate 48. For example, PC (with a refractive index of 1.584), polystyrene (with a refractive index of 1.592), PET (with a refractive index of 1.576), and so forth may be used.

The transparent member 130 is substantially rectangular in shape, with a beam splitter 110 formed on its upper surface, particularly at the side where the aerial image P is to be formed, and a retro-reflective sheet 120 formed on its back surface. The beam splitter 110 may be formed as a film over the upper surface of the transparent member 130, or may be attached to the upper surface of the transparent member 130 using an optical adhesive. Also, the retro-reflective sheet 120 may be attached to the back surface of the transparent member 130 using, for example, an optical adhesive.

Next, the operation of the aerial image display device 100 according to the present embodiment will be described. As shown in FIG. 4B, light from the light source 140 illuminates the back surface of the retro-reflective sheet 120. The illuminated light passes through the cutouts or openings formed in the retro-reflective sheet 120, and a design Q, which is the original image of an aerial image P, is produced. The light that passes through the cutouts or openings is partly reflected by the beam splitter 110 via the transparent member 130, and the reflected light is retro-reflected by the retro-reflective sheet 120. The retro-reflected light passes through the beam splitter 110 via the transparent member 130, and the aerial image Q of the design P is re-formed above the beam splitter 110.

By filling the space between the beam splitter 110 and the retro-reflective sheet 120 with a transparent member 130 with a refractive index greater than 1, the difference in refractive index between the transparent member 130 and the retro-reflective sheet 120 can be made as small as possible, compared to when the space is an air layer. Furthermore, the specular reflection and internal reflection that the light entering and exiting the retro-reflective sheet 120 undergoes on the surface of and inside the retro-reflective sheet 120 and the retro-reflective sheet 120 can be reduced. Ideally, if the refractive indices of the transparent member 130 and the retro-reflective sheet 120 are equal, the transparent member 130 and the retro-reflective sheet 120 can be seen as one optically seamless member. Therefore, as shown in FIG. 2A and FIG. 2B, it is possible to prevent or substantially prevent undesirable light L2 and L3 caused by reflections that occur on the surface of the retro-reflective sheet 120. By this means, it is possible to prevent or substantially prevent virtual images and stray light V of the design Q from being produced. As a result of this, virtual aerial images W are prevented or substantially prevented from being produced, so that the visibility, contrast, and so forth of aerial images P can be improved.

Note that, by inserting a transparent member 130 having a refractive index greater than 1, the refraction angle of light passing through the beam splitter 110 becomes larger than when an air layer is provided, and the floating distance of the aerial image P becomes somewhat smaller. Therefore, when an aerial image that floats over a large distance is to be displayed, the thickness of the transparent member 130 needs to be taken into account.

The aerial image display device according to this embodiment can be applied to display of information and user input on any type of device. For example, the aerial image display device of this embodiment can be applied to computer devices, automotive electronic devices, ATMs at banks, ticket vending machines at train stations, elevators' buttons, and so forth.

Although a preferred embodiment of the present disclosure has been described in detail above, the present disclosure is by no means limited to the above-described specific embodiment, and various alterations and changes can be made within the scope of the claims attached herewith.

## Claims

1. A display device for displaying an aerial image using retro-reflection, the display device comprising:
an optical member configured to separate incident light into reflected light and transmitted light;
a retro-reflective member positioned to face the optical member and having a cutout or an opening that features a design;
a light source positioned on a backside of the retro-reflective member; and
a transparent member made of a substance with a refractive index greater than 1, and positioned between the optical member and the retro-reflective member.

2. The display device according to claim 1,
wherein the transparent member is substantially rectangular in shape, and
wherein an upper surface of the transparent member is in contact with the optical member, and a bottom surface of the transparent member is in contact with the retro-reflective member.

3. The display device according to claim 1 or 2, wherein the transparent member is made of a material, a difference between the retro-reflective member and the material in refractive index being substantially zero or less than or equal to a predetermined value.

4. The display device according to one of claims 1 - 3, wherein, when the retro-reflective member includes a phase member on a surface of the retro-reflective member, the transparent member is made of a material, a difference between the phase member and the material in refractive index being substantially zero or less than or equal to a predetermined value.

5. The display device according to one of claims 1 - 4, wherein the transparent member is made of an acrylic material.

6. The display device according to one of claims 1 - 5, wherein the optical member is a half mirror, a beam splitter, or a polarizing beam splitter.
